# EUROPEAN PATENT APPLICATION

(11) **EP 0 690 016 A1**
(43) Date of publication of application: **03.01.1996**
(21) Application number: 95830257.2
(22) Date of filing: 21.06.1995
(51) Int. Cl.: B65G 47/51, B65G 49/08, B65G 61/00

(54) **A product stacking plant, in particular for ceramic tiles and the like**

(30) Priority: 29.06.1994 IT MO940098
(71) Applicant: C.M.F. COSTRUZIONI MECCANICHE FRIGNANESI S.r.l., I-41026 Pavullo Nel Frignano (Modena) (IT)
(72) Inventor: Croci, Salvatore, I-41026 Pavullo Nel Frignano (Modena) (IT)
(74) Representative: Lanzoni, Luciano

(57) **Abstract**

The invention relates to a product stacking plant, in particular for ceramic tiles and the like. At least one loading/unloading machine (4,5) operates parallel side-by-side with a feed line (1) and a removal line (2) of tiles (3). The loading/unloading machine (4, 5) is provided with a collection unit (8) for removing a group of tiles (3), formed on a motorized roller plane (7), and transferring said group to a pre-established position of a stacking area (6); this operation can also be exactly reversed. The tiles (3) are sent to the roller plane (7) by a first connection conveyor (9) operating together with the first line (1) and removed therefrom by a second connection conveyor (10) operating together with the second line (2). By a combination of activation or deactivation of the first connection conveyor (9) and the second connection conveyor (10), the loading and unloading functions of the machine (4, 5) can be inverted.

## Description

The invention relates to a product stacking plant, in particular for ceramic tiles and the like.

Fixed stacking plants are well known and normally arranged along a production line of products such as ceramic tiles, and have the function of realizing an intermediate stacking of the tiles in between two stages of a production line.

A typical example is constituted by stacking plants arranged between a 24-hour continuous function kiln exit, and a selection phase, which is normally organized in two separate workshifts.

The prior art teaches two similar realizations, operating at two parallel sides of an accumulation stillage, which utilize a loading machine, which stacks piles of tiles on the stillage, and an unloading machine, which lifts and removes completed stacks of files from said stillage.

Such machines essentially comprise an upright, on which a horizontal arm is projectingly constrained with vertical movement freedom.

The horizontal arm bears a rest plane, on which a line of tiles is formed, and also bears a transfer device which translates the line of tiles in a parallel direction and deposits them on the stillage or on top of other lines of stacked tiles.

The unloading machine functions inversely to the loading machine. It is connected to the tile unloading line by means of a variable-tilt transporter, while the loading machine is connected, by a like transporter, to the tile feed line.

The above-described prior art solutions present numerous drawbacks and limitations.

One of these is that the machines are realized with projecting arms which, positioned on two opposite sides of the stillage, permit any rearrangement of the machines' reciprocal positions with reference to the advancement direction of the production line.

Normally, the loading machine, with reference to said direction, operates upstream, while the unloading machine operates downstream. Since the need to operate the unloading machine upstream of the loading machine might arise, it is vital for the machine to be structured in such a way that they can change places along the line.

A further drawback in the prior art realizations is directly attributable to the modalities of realization of the stacks of tiles, which are imprecisely formed, a characteristic that can lead to a danger of their tilting and falling.

The present invention, as it is characterized in the following claims, obviates the above drawbacks by providing a stacking plant equipped with a loading machine and an unloading machine, each of which is able to operate on and to move along a stacking area arranged parallel to a feeding line and a removal line; said machines being provided with connecting devices permitting an inversion of their roles at any time.

Further characteristics and advantages of the present invention will better emerge from the detailed description that follows, of an embodiment of the invention, illustrated in the form of a non-limiting example in the accompanying drawings, in which:

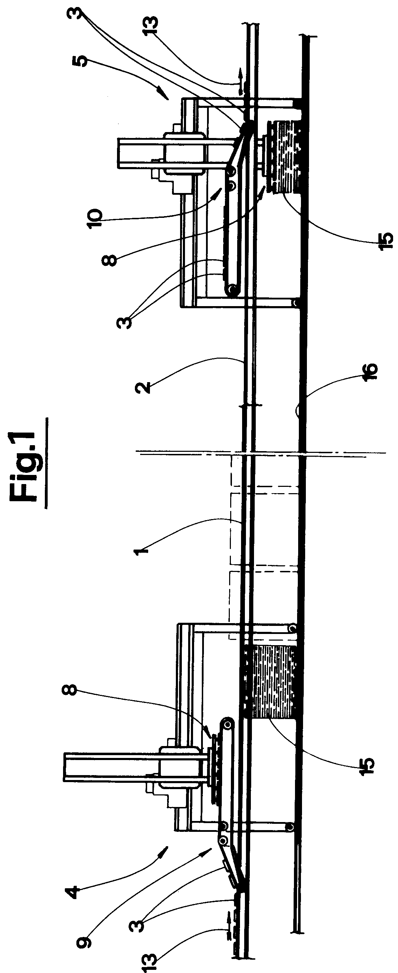

figure 1 is a frontal view thereof in vertical elevation;

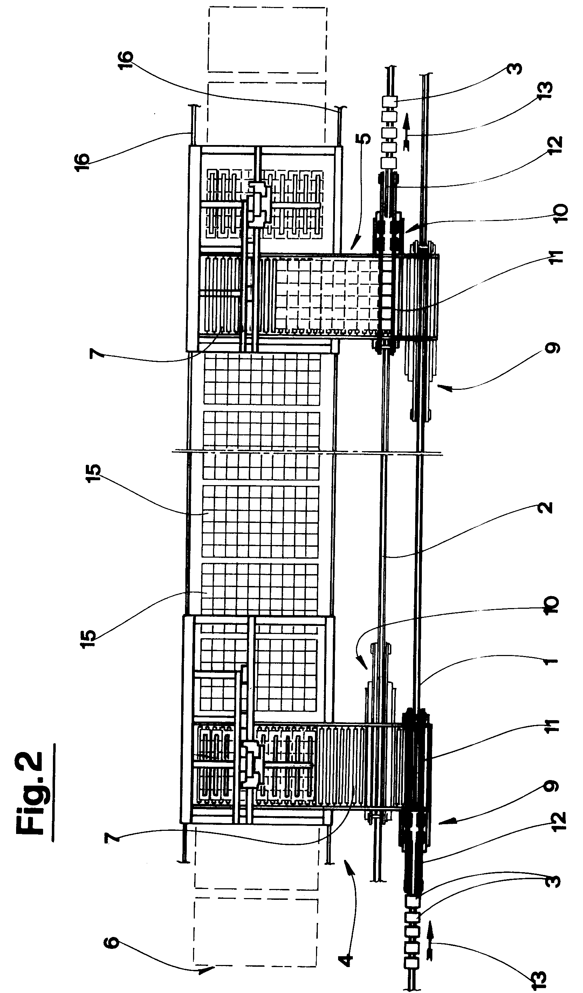

figure 2 is a schematic plan view from above of figure 1;

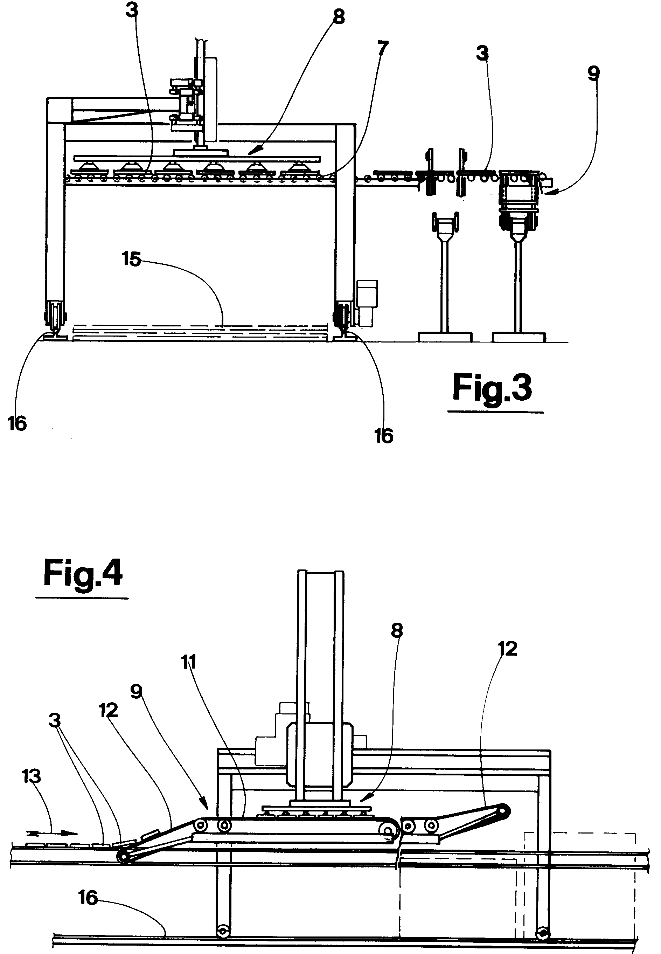

figure 3 shows a schematic lateral view of figure 1 in enlarged scale;
figure 4 shows a detail of figure 1 in enlarged scale.

With reference to the figures, 1 denotes a feed or loading line, while 2 indicates a removal or unloading line for tiles 3. The two lines 1 and 2 are normal tile conveyor lines, for example of the track or belt type, and are located parallel and side-by-side with a stacking area 6.

Two identical loading/unloading machines 4 and 5, operate in the stacking area 6. Each machine is able to move in two directions along tracks 16 throughout the whole stacking area 6.

Each of the loading/unloading machines 4 and 5 comprises a station whereon a motorized roller plane 7 operates; said roller plane 7 lying horizontally and being predisposed for formation and redistribution of lines of tiles 3 being conveyed on the line 1 to the roller plane 7 or to be conveyed from said line 1 to line 2, as well as for movement of the lines perpendicularly to the direction of the loading/unloading machines 4 and 5.

A collection unit 8 is predisposed to remove at least a complete group, constituted by a plurality of side-by-side lines of tiles 3, and transfer same from said station on the roller plane 7 to a pre-established position in the stacking area 6 and vice versa.

The collection unit 8 is able to translate vertically and horizontally parallel to the movement direction of the loading/unloading machines 4 and 5, and comprises a plurality of suction cups, predisposed to exert a gripping action on a group of tiles constituted by a line of tiles 3 lying side-by-side.

The roller plane 7 is prolonged outwardly of the stacking area 6 to give rise to a section of the plane itself which is positioned above the two lines 1 and 2.

A first connection conveyor 9 and a second connection conveyor 10 are incorporated in this section.

In particular, the first connection conveyor 9 connects the feed line 1 with the roller plane 7 and has the task of entraining the tiles 3 coming from the feed line 1 onto the roller plane 7, according to the direction indicated by arrow 13.

The second connection conveyor 10 has the task of connecting the roller plane 7 with the unloading line 2. This enables the roller plane 7 to be cleared of tiles 3 arranged in lines on the section of the plane, which is above the unloading line 2.

The first connection conveyor 9 and the second connection conveyor 10 are belt-type conveyors and comprise a horizontal tract 11, constituted by belts inserted between the rollers of the roller plane 7, and an inclined tract, or ramp 12, which connects the horizontal tract with underlying line 1 or 2.

Both ramps 12 are articulated projectingly of the horizontal tracts 11 such as to be positionable in two positions:
a lowered position, at which they are inserted in the respective transport lines 1 and 2;
a raised position, at which they are disconnected from their respective lines 1 or 2 such as not to obstruct transit of tiles 3 thereon.

In their positions according to arrow 13, which indicates the usual advancement direction along lines 1 and 2, the first connection conveyors 9 are located upstream of the respective roller planes 7, while the second connection conveyors 10 are downstream of the roller plane 7, and operate on the unloading line 2.

In the illustrated realization, the collection unit 8 is provided with a horizontal plane of suction cups by means of which a whole group of tiles 3, formed on the roller plane 7, can be engaged and transferred.

The above-described situation occurs when the stacking area 6 is, for example, located between the kiln exit and the selection line.

If stacking is carried out before entrance to the kiln, meaning that the tiles 3 are as yet unfired, the formation of the tile group on the roller plane 7 occurs in the same way as before, but with the use of a tile rest frame.

This frame can be partially inserted between the rollers of the roller plane 7 and can be removed by a gripping unit provided with a gripping organ able to grip to frame on which the tiles 3 are deposited. In this case the gripping unit operates between three side-by-side positions: a first in which an empty tile frame is removed (or deposited) from a stack (or piled thereon); a second in which tiles 3 are loaded (or unloaded) on single frames situated on the roller plane 7; and a third in which the single loaded frames are arranged in stacks, (or removed therefrom).

In the situation illustrated in the accompanying figures of the drawings, the first loading/unloading machine 4 functions as a loading machine, while the second loading/unloading machine 5 functions as an unloading machine.

In this situation the ramp 12 of the first connection conveyor 9 (of the first loading/unloading machine) is in the lowered position, such as to intercept the tiles 3 being transferred on the line 1.

The tiles 3 are thus directed by the ramp 12 on to the horizontal tract 11 to form lines, which are then transferred in a perpendicular direction to the advancement direction of the line 1 along the roller plane 7. When a predetermined number of successive lines have been transported in this way, groups of tiles 3 are formed.

Once the groups of tiles 3 have been formed, the collection unit 8 is positioned on the portion of the roller plane 7 bearing said groups and removes them by means of the sucker groups thereon provided. Then, when the groups have been removed, the collection unit 8 moves on to a vertical of a predetermined position of the stacking area 6 in order to deposit its load of tiles 3 directly on the floor of the stacking area 6, or above another group of tiles 3 previously deposited.

Once the tiles 3 have been unloaded, the collection unit 8 returns to the roller plane 7 to repeat the operation.

When a stack of tile groups has been completed, the loading/unloading machine 4 move one step in the opposite direction to that indicated by arrow 13, to commence formation of a new stack from the bottom.

Thus many stacks are formed side-by-side of planes or groups of tiles 3, denoted by 15.

Independently of the work carried out by the first loading/unloading machine 4, the second loading/unloading machine 5, functioning inversely to the first loading/unloading machine 4, removes groups of planes of tiles 3 from the stack 15, already present in the stacking area 6, and takes them to the roller plane 7 where they are transferred, line by line, on to the horizontal tract 11 of the second connection conveyor 10.

The tiles 3 are removed from the horizontal tract 11 by means of the ramp 12 and placed on the unloading line 2, wherefrom they pass on to the next operation, which might be, for example, the selection phase.

During this phase of the process, the first connection conveyor 9 of the second loading/unloading machine 5 is completely inactive, as is the second connection conveyor 10 of the first loading/unloading machine 4.

The special feature of the plant consists in the fact that the roles of the two loading/unloading machines 4 and 5 can be exchanged: first loading/unloading machine 4, initially the loading machine, becomes the unloading machine, while second loading/unloading machine 5, initially the unloader, becomes the loader. Said exchange is performed as follows:
- regarding the first loading/unloading machine 4, removing the inclined tract from the line 1, or the ramp 12 of the first connection conveyor 9, while at the same time introducing the ramp 12 of the second connection conveyor 10 onto the line 2;
- regarding the second loading/unloading machine 5, introducing the ramp 12 on to the line 1 of the first connection conveyor 9, while removing from line 2 the ramp 12 of the second connection conveyor 10;
- regarding the roller planes 7, inverting the function direction.

In this way, the tiles 3 transit freely along the line 1 below the first loading/unloading machine 4 to be collected in lines on the roller plane 7 of the second machine 5, while the first machine 4 unloads lines of tiles 3 freely transiting below the second loading/unloading machine 5 on to the line 2.

The exchange can happen, for example, when one of the two following operative conditions exist:
1) the second loading/unloading machine 5 is working faster than first loading/unloading machine 4; in this case, when the first loading/unloading machine 4 reaches the second loading/unloading machine 5, this indicates that the stocking area is practically empty;
2) the first loading/unloading machine 4 is working faster than the second loading/unloading machine 5; in this case, the stocking area, being limited, would be filled by the first loading/unloading machine 4, which would no longer be able to receive tiles 3 for depositing.

When limit conditions are reached, the two loading/unloading machines 4 and 5 change roles as above-described.

Among the many advantages of the invention is that no special equipment is called for in the stocking area, as no more than a simple floor space is required.

## Claims

1. A product stacking plant, in particular for ceramic tiles and the like, characterized in that it comprises:
at least two parallel transport lines (1 and 2), at least a first line (1) of which feeds or loads the tiles (3), and at least a second line (2) of which unloads the tiles (3);
at least one loading/unloading machine, able to move in two directions along a stacking area (6) of tiles (3) situated parallel to the at least two parallel transport lines (1 and 2); said at least one loading/unloading machine comprising:
a station on which a motorized roller plane (7) operates, said roller plane (7) being predisposed to form lines of tiles (3) conveyed by the line (1) to the roller plane (7) or remove lines of tiles (3) from said roller plane (7) to the line (2); said roller plane (7) also being predisposed to move said lines of tiles (3) in a perpendicular direction to a movement direction of the at least one loading/unloading machine along rails (16);
at least a collection unit (8) for removing at least a group constituted by a plurality of side-by-side lines of tiles (3) for transferring said group from said station on which said roller plane (7) operates to a pre-established position in said stacking area (6); and to perform an exactly inverse operation thereto;
said collection unit (8) being able to translate vertically and at least horizontally parallel to a movement direction of said at least one loading/unloading machine;
a first connection conveyor (9) for connecting said first line (1) to said roller plane (7), to channel the tiles (3) arriving from said first line (1) on to said roller plane (7);
a second connection conveyor (10) for connecting said second line (2) to said roller plane (7), for entraining the tiles (3) situated on said roller plane (7) on to said second line (2);
said first connection conveyor (9) and said second connection conveyor (10) being introducible to and removable from said first and second lines (1, 2).

2. A plant as in claim 1, characterized in that said first and second lines (1 and 2) are arranged reciprocally parallel and side-by-side, and are constituted by belt-type conveyor lines or the like.

3. A plant as in claim 2, characterized in that said first connection conveyor (9) and said second connection conveyor (10) are belt-type conveyors and comprise a horizontal tract (11), constituted by belts inserted between rollers of said roller plane (7) and a ramp (12) connecting said horizontal tract (11) with an underlying line, which may be the first line (1) or the second line (2); said ramp (12) being articulated projectingly to the horizontal tract (11) such as to be positionable in two positions;
a lowered position thereof at which the ramp (12) is inserted into the first or second line (1, 2); and a raised position thereof, at which said ramp (12) is removed from the first or the second line (1, 2) such as not to obstruct transit of said tiles (3) on said first or second line (1, 2).

4. A plant as in claim 1, characterized in that the first connection conveyor (9) is located upstream of the roller plane (7) on the first line (1), while the second connection conveyor (10) is located downstream of the roller plane (7) on the second line (2).

5. A plant as in claim 1, characterized in that it comprises two of said at least one loading/unloading machine, a first loading/unloading machine (4) and a second loading/unloading machine (5), each of which is able to move in two directions along a stacking area (6) situated parallel to said first and second lines (1, 2); one being either of which first and second loading/unloading machines (4 or 5) operating as a loading machine, another being either of which first and second loading/unloading machines (4 or 5) operating as an unloading machine.
